# NEUE EUROPÄISCHE PATENTSCHRIFT

(11) **EP 1 593 909 B2**
(45) Veröffentlichungstag und Bekanntmachung des Hinweises auf die Entscheidung über den Einspruch: **02.12.2020**
(45) Hinweis auf die Patenterteilung: 26.01.2011
(21) Anmeldenummer: 05008967.1
(22) Anmeldetag: 23.04.2005
(51) Int. Cl.: F23L 15/02, F23G 7/06

(54) **Verfahren und Vorrichtung zur Reinigung von aerosol- und staubbelasteten Abgasströmen**
Apparatus and method to clean exhausts containing aerosol and dust
Dispositif et méthode pour la purification des gaz de combustion contenant aérosols et poussières

(30) Priorität: 07.05.2004 DE 102004022737
(43) Veröffentlichungstag der Anmeldung: 09.11.2005
(73) Patentinhaber: CTP Chemisch Thermische Prozesstechnik GmbH, 8042 Graz (AT)
(72) Erfinder: Schedler, Johannes, 8410 Wildon (AT); Thalhammer, Heimo, Dr., 8010 Graz (AT); Deutsch, Alexander, 8200 Gleisdorf (AT)
(74) Vertreter: LS-MP von Puttkamer Berngruber Loth Spuhler

(56) Entgegenhaltungen:
- EP-A- 0 928 938
- DE-C1- 10 214 567
- US-A- 5 259 757
- US-A- 5 538 420
- US-A- 5 620 668
- US-A- 5 839 894

## Beschreibung

Die Erfindung bezieht sich auf ein Verfahren zur Reinigung von Abgasströmen nach dem Oberbegriff des Anspruchs 1, eine Vorrichtung zur Durchführung des Verfahrens und dessen Verwendung zur Reinigung von extrem stark aerosol- und/oder staubbelasteten Abgasströmen.

Derartige Abgasreinigungsverfahren und -vorrichtungen sind bekannt. So geht aus DE 34 28 537 A1 eine thermische Nachverbrennungsanlage hervor, die drei Regeneratoren mit stückigem Schüttgut als Wärmespeicherkörper aufweist. Eine ähnliche Vorrichtung mit prismenförmigen Wärmespeicherkörpern mit einer Vielzahl von zur Prismenhauptachse parallelen Kanälen geht aus EP 0 472 605 B1 hervor. Durch die geraden Kanäle wird zwar eine laminare Strömung erzielt, dennoch verschmutzen auch diese Wärmespeicherkörper nach längerer Betriebszeit erheblich, wenn das Abgas mit organischem Aerosol und kohlenstoffhaltigem Staub belastet ist. Die Verschmutzung blockiert den freien Durchgang des Abgases durch die Wärmespeicherkörper und verringert damit die Kapazität der Anlage bei verschlechterter Reinigungsleistung und erhöhten Betriebskosten.

Um die Verschmutzung in den Regeneratoren zu beseitigen, wird nach US 5,259,757 mit einem Brenner auf ca. 500 °C aufgeheizte Luft dem zu reinigenden Regenerator zugeführt. Nachteilig ist hier der hohe Energiebedarf des Brenners, um die Temperaturdifferenz zur Brennkammertemperatur auszugleichen.

Nach US 5,839,894 wird Brennkammerluft aus der Brennkammer gesaugt, um Ablagerungen an den Wärmespeicherkörpern durch Pyrolyse zu entfernen. Bei diesem Verfahren weist die Gesamtanlage während der Pyrolyse jedoch eine eingeschränkte Reinigungsleistung auf, da diese nur zwei Regeneratoren besitzt, die bei jedem Umschalten das Totvolumen des Regenerators, dem das Abgas zuvor zugeführt worden ist, ungereinigt in die Atmosphäre entlässt.

Die bekannten regenerativen Abgasreinigungsanlagen haben sich insbesondere bei Abgasströmen als ungeeignet erwiesen, die hochsiedende Aerosole und Stäube enthalten, da diese den an sich hohen Wirkungsgrad solcher Anlagen durch Adsorption und Ablagerungen verschlechtern. Solche mit hochsiedenden Aerosolen und Stäuben beladene Abgasströme treten beispielsweise auf, wenn bituminöse Stoffe verarbeitet werden. So werden z.B. die Elektroden für die Schmelzelektrolyse zur Aluminiumherstellung durch Erhitzen einer Kohle-Bitumen-Mischung hergestellt. Da in der Abluft solcher bituminöse Stoffe verarbeitenden Anlagen zudem polyaromatische Kohlenwasserstoffe (PAHs) als hochsiedende organische Komponenten enthalten sind, sind an die Reinigungsleistung der regenerativen thermischen Nachverbrennungsanlage für eine derartige Abluft besonders hohe Anforderungen zu stellen.

Aufgabe der Erfindung ist es, unter Beibehaltung des hohen Wirkungsgrades und der hohen Reinigungsleistung regenerativer thermischer Nachverbrennungsanlagen auch extrem stark aerosol- und/oder staubbelastete Abgasströme zu reinigen.

Dies wird erfindungsgemäß durch das im Anspruch 1 gekennzeichnete Verfahren erreicht. In den Ansprüchen 2 bis 7 sind vorteilhafte Ausgestaltungen des erfindungsgemäßen Verfahrens wiedergegeben. Im Anspruch 8 ist eine bevorzugte Vorrichtung zur Durchführung des erfindungsgemäßen Verfahrens angegeben, welche durch die Ansprüche 9 bis 14 in vorteilhafter Weise weiter ausgebildet wird. Die Ansprüche 15 und 16 haben eine bevorzugte Verwendung der erfindungsgemäßen Vorrichtung zum Gegenstand.

Nach der Erfindung werden die gröberen Partikel und Aerosolkomponenten zuerst in einer Vorreinigungsanlage mit wenigstens zwei parallel geschalteten Festbettfiltereinrichtungen abgeschieden. Die wenigstens zwei Festbettfiltereinrichtungen werden dabei wechselweise in einen Abscheide- oder Regenerierungsbetrieb umgeschaltet. Die Vorreinigungsanlage ist in der Rohgasleitung, durch die das zu reinigende Abgas strömt, vor der thermischen regenerativen Nachverbrennungsanlage vorgesehen. Das Festbettfilter, das sich im Abscheidebetrieb befindet, wird mit der Temperatur betrieben, die die zu reinigende Abluft aufweist, beispielsweise mit 50 - 200 °C.

Die Festbettfilter werden durch keramisches Schüttgut gebildet, beispielsweise durch Sattelkörper mit einer Körnung von 0,5 - 4 " (1,27 - 10,16 cm), insbesondere 1 - 2 " (2,54 - 5,08 cm). Die Höhe des Festbettfilters oder dessen Schichtdicke beträgt vorzugsweise 0,3 - 1 m, insbesondere etwa 0,6 m.

Die unstrukturiert gelagerten Füllkörper des Festbettfilters erzeugen im durchtretenden Abgas eine starke Turbulenz. Durch die turbulente Strömung wird ein Großteil der im Abgas enthaltenen gröberen, festen Staub- und flüssigen Aerosolteilchen an den Füllkörpern des Festbettfilters angelagert und abgeschieden. Der abgeschiedene Feststoff verbleibt in den Toträumen der Schüttung, während die abgeschiedene Flüssigkeit teilweise nach unten abläuft und sich am Boden der Festbettfiltereinrichtung ansammelt oder als Flüssigkeitsfilm an den Füllkörpern haften bleibt.

Demgegenüber treten gasförmige Schadstoffe in dem Abgas ungehindert durch die Vorreinigungsanlage hindurch, um dann in der stromab installierten regenerativen thermischen Nachverbrennungsanlage zerstört zu werden. Die Festbettfilter sind derart ausgelegt, dass die Feststoff- und Flüssigkeitsaufnahme maximiert wird, der verursachte Druckverlust jedoch minimal bleibt.

Nach der Erfindung ist vorzugsweise ein Brenner oder dergleichen Heizeinrichtung vorgesehen, um aus Frischluft Heißluft zu erzeugen. Diese Heißluft kann zur Regenerierung der Festbettfiltereinrichtung verwendet werden, die sich im Regenerierungsbetrieb befindet.

Durch die Heißluft werden die Ablagerungen im Festbettfilter zum Teil verbrannt, pyrolysiert und ausgetrieben. Die dabei entstehenden Abgase werden zunächst dem Abgasstrom in der Rohgasleitung zugeführt und, wenn die Temperatur des zu regenerierenden Festbettfilters durch das Heizgas auf eine vorgegebene Temperatur aufgeheizt worden ist, der Brennkammer der regenerativen thermischen Nachverbrennungsanlage zugeführt. Wenn nämlich die gesamten Abgase, die bei der Regenerierung des Festbettfilters entstehen, über die Rohgasleitung den Regeneratoren zugeführt werden, kann eine zu starke Verunreinigung der Wärmespeicherkörper in den Regeneratoren auftreten. Zudem sind die Abgase, die der Rohgasleitung bei tieferer Temperatur von dem Festbettfilter im Regenerierungsbetrieb zugeführt werden, leichter flüchtig.

Demgegenüber würde die Zufuhr der gesamten Abgase, die bei der Regenerierung des Festbettfilters entstehen, also auch der, die unter der vorgegebenen Temperatur aus dem Festbettfilter austreten, die Energiebilanz der Nachverbrennungsanlage verschlechtern, da dem Brenner der Nachverbrennungsanlage zusätzlich Brennstoff zugeführt werden müsste.

Es werden daher die bei der Regenerierung des Festbettfilters gebildeten Abgase erst der Rohgasleitung zugeführt, bis das Festbettfilter eine Temperatur von wenigstens 200 °C, vorzugsweise etwa 300 °C erreicht hat, und anschließend der Brennkammer der regenerativen thermischen Nachverbrennungsanlage, wobei die Temperatur der der Brennkammer zugeführten Abgase vorzugsweise 200 - 450 °C, insbesondere 300 bis 400 °C beträgt. Die Temperatur der Abgase des Festbettfilters im Regenerierungsbetrieb wird durch einen Temperaturfühler gemessen. Die Temperatur in der Brennkammer der regenerativen thermischen Nachverbrennungsanlage beträgt vorzugsweise 750 bis 1000 °C, insbesondere 800 - 900 °C.

Nach der Vorreinigungsanlage wird das Abgas in der Rohgasleitung durch die mit dem Brenner erhitzte Heißluft um 20 - 100 °C, vorzugsweise 30 - 50 °C vorerwärmt. Dadurch wird die Neigung der Aerosole, die von der Vorreinigungsanlage nicht zurückgehalten werden konnten, sich an den Wärmespeicherkörpern in den Regeneratoren anzulagern, reduziert.

Die Vorerwärmung mit Heißluft bewirkt, dass vorhandene kleinste Flüssigkeitströpfchen im Gasstrom gehalten und zu einem größeren Anteil verdampft werden und sich dadurch nicht zu größeren Tröpfchen vereinigen können, die sich im unteren Bereich der Regeneratoren ablagern würden. Ein weitgehendes Verhindern der Ablagerung von Flüssigkeit im unteren Bereich der Regeneratoren ist deshalb essentiell, da bei regenerativen thermischen Nachverbrennungsanlagen keine kontinuierliche bauliche Trennung zwischen Roh- und Reingasteil vorhanden ist. Aus dem Rohgas niedergeschlagene Flüssigkeit könnte unter Umständen im folgenden Reingaszyklus bei etwas höherer Reingastemperatur wiederum verdampft und desorbiert werden und somit in die Atmosphäre gelangen. Dieser auftretende Adsorptions/Desorptionseffekt wirkt sich speziell beim Reinigen von Abgasen aus, die hochsiedende organische Verbindungen, insbesondere polyaromatische Kohlenwasserstoffe, enthalten, deren Gehalt im Reingas meist auf unter 0,5 mg/Nm³ reduziert werden muss, während der organische Kohlenstoffgehalt im Reingas insgesamt unter 10 -20 mg/Nm³ gehalten werden muss.

Das vorgereinigte und vorgewärmte Abgas tritt anschließend in die regenerative thermische Nachverbrennungsanlage ein. Aufgrund der vorgeschalteten Vorreinigung und Vorerwärmung kommt es zu einer sehr verminderten Anlagerung von festen und flüssigen Stoffen an den Wärmespeicherkörpern der Regeneratoren. Dabei sei betont, dass aufgrund der regenerativen Verfahrensweise die Wärmespeicherkörper der wechselweise betriebenen Regeneratoren weitgehend von Ablagerungen freigehalten werden müssen, um bei deren zyklischem Betrieb keine Schadstoffe in das Reingas zu verschleppen.

Dazu werden vorzugsweise prismenförmige, mit den Prismenhauptachsen in Gasströmungsrichtung angeordnete Wärmespeicherkörper verwendet, deren Inneres jeweils eine Vielzahl von durchgehenden, in beide Prismenendflächen mündende, zur Prismenhauptachse im Wesentlichen parallele und im Wesentlichen geradlinig verlaufende Kanäle aufweist. In jedem Regenerator sind dabei vorzugsweise mindestens zwei übereinander angeordnete Lagen aus mehreren mit ihren Prismenmantelflächen aneinanderliegenden Wärmespeicherkörpern vorgesehen.

Dabei hat es sich als vorteilhaft erwiesen, dass zumindest die Wärmespeicherkörper in der untersten Lage eine porenfreie Oberfläche aufweisen. Die porenfreie Oberfläche kann dabei durch eine glasierte Oberfläche gebildet sein.

Die spezifische Oberfläche dieser Wärmespeicherkörper beträgt vorzugsweise mindestens 500 m²/m³. Die Kanäle weisen eine gasdurchströmbare Querschnittsfläche von vorzugsweise 3 - 25 mm² auf. Die Breite der Stege zwischen den Kanälen beträgt vorzugsweise 0,5 - 1 mm. Die Prismenlänge der Wärmespeicherkörper beträgt maximal 1 m. Solche durch Extrusion keramischer Massen hergestellte Wärmespeicherkörper sind in EP 0 472 605 B2 näher beschrieben.

Durch eine weitgehend laminare Strömung im gesamten Wärmespeicherkörper wird von vornherein die Tendenz zur Anlagerung von Teilchen und Tröpfchen wesentlich reduziert. Die Wärmespeicherkörper weisen vorzugsweise eine porenfreie Oberfläche auf. Dies gilt insbesondere für die unteren Lagen. So können z.B. bei Regeneratoren mit vier Wärmespeicherlagen die beiden unteren Wärmespeicherkörperlagen durch eine Glasur eine porenfreie Oberfläche aufweisen. Die Glasur kann beispielsweise durch Tauchen des Wärmespeicherkörpers in eine geeignete Salzlösung aufgebracht werden. Auch wird zur Bildung porenfreier Wärmespeicherkörper eine dichte Tonerde- bzw. Porzellan-Keramik verwendet. Durch die porenfreie Oberfläche wird die Verschmutzung der Wärmespeicherkörper weiter reduziert.

Die laminare Strömung des vorerwärmten Rohgases in den Wärmespeicherkörpern ermöglicht zudem ein weitgehendes Hindurchtreten aller festen und aerosolförmigen Teilchen in die Brennkammer der regenerativen thermischen Nachverbrennungsanlage, wo diese vollständig durch Oxidation zerstört werden.

Damit es zu keiner Anlagerung von Partikeln am Gebläselaufrad kommen kann, ist das Hauptgebläse der erfindungsgemäßen Vorrichtung zum Fördern des Abgases vorzugsweise stromabwärts der regenerativen thermischen Nachverbrennungsanlage angeordnet. Die regenerative thermische Nachverbrennungsanlage wird somit mit Unterdruck betrieben.

Nach der Erfindung weist die regenerative thermische Nachverbrennungsanlage wenigstens vier mit Wärmespeicherkörpern gefüllte Regeneratoren mit einer gemeinsamen Brennkammer auf.

In einem Zyklus wird einem Regenerator, dessen Wärmespeicherkörper im Zyklus zuvor erwärmt worden sind, das Rohgas zugeführt, das sich erwärmt und in der Brennkammer zu Reingas verbrannt wird, das durch einen zweiten Regenerator unter Erwärmung von dessen Wärmespeicherkörpern abgezogen wird. Währenddessen wird ein dritter Regenerator mit Spülgas gespült, durch den beim nächsten Zyklus das Reingas von der Brennkammer abgezogen wird. Ein solcher thermischer Nachverbrennungszyklus dauert normalerweise 1 - 5, insbesondere 1 - 2 min.

Als Spülgas kann das Reingas verwendet werden. Um die Reinigungsleistung der regenerativen thermischen Nachverbrennungsanlage weiter zu verbessern, kann als Spülgas auch die Heißluft verwendet werden, die, wie vorstehend erwähnt, durch Erwärmen von Frischluft mit einem Brenner erzeugt wird. Auch kann dem Reingas diese Heißluft zugeführt werden, um ein vorerwärmtes Spülgas zu erhalten. Vorzugsweise wird die Temperatur des Reingases durch die Heißluft zur Bildung des Spülgases um 50 - 200 °C, insbesondere 100 - 150 °C erhöht. Durch diese Temperaturerhöhung des Spülgases werden insbesondere polyaromatische Kohlenwasserstoffe beim Spülen der Wärmespeicherkörper leichter desorbiert.

Wenn nach längerer Betriebszeit doch Ablagerungen an den Wärmespeicherkörpern der Regeneratoren auftreten, werden diese nach der Erfindung durch Pyrolyse entfernt. Damit die regenerative thermische Nachverbrennungsanlage auch während der Pyrolyse zur Abgasreinigung zur Verfügung steht und auch während der Pyrolyse eine gleichbleibende maximale Reinigungsleistung aufrechterhalten wird, ist erfindungsgemäß ein vierter, zusätzlicher Regenerator in die regenerative thermische Nachverbrennungsanlage integriert, welcher für die Pyrolyse zur Verfügung steht, während gleichzeitig die drei übrigen Regeneratoren das Abgas entsorgen. Zur Pyrolyse der Ablagerungen in dem vierten Regenerator wird die Brennkammerluft aus der Brennkammer in die Rohgasleitung stromaufwärts der regenerativen thermischen Nachverbrennungsanlage gesaugt.

Zur Pyrolyse werden die Wärmespeicherkörper mit der Brennkammerluft auf wenigstens 400 °C wenigstens 1 h erwärmt. Nach der Pyrolyse wird der Regenerator mit Reingas gespült und abgekühlt. Eventuelle Überschussenergie aus der Verbrennung der Schadstoffe kann so zum Betrieb der Pyrolyse eingesetzt werden. Nach dem Abkühlen des Regenerators, der durch Pyrolyse gereinigt worden ist, kann dieser als Reingasregenerator eingesetzt werden, durch den bei der regenerativen thermischen Nachverbrennung das Reingas von der Brennkammer abgezogen wird. Dann kann der nächste Regenerator im Pyrolyse-Betrieb gefahren werden.

Bei der erfindungsgemäßen Vorrichtung kann zur Steuerung des Absaugabsperrorgans in jedem Generator ein Temperaturfühler zur Messung bzw. Begrenzung der Temperatur der Wärmespeicherkörper vorgesehen sein. Der Temperaturfühler ist vorzugsweise jeweils am unteren Auslass des Generators angeordnet.

Das Hauptgebläse zum Fördern des Abgases, des Reingases und des Spülgases zur Bildung eines Unterdrucks in den Regeneratoren ist vorzugsweise stromabwärts der regenerativen thermischen Nachverbrennungsanlage in der Reingasleitung vorgesehen. Die Spülgasleitung an der Druckseite des Gebläses ist vorzugsweise an die Reingasleitung angeschlossen. Weiterhin wird die Absaugleitung vorzugsweise an die Spülgasleitung angeschlossen und die Absaugabsperrorgane werden vorzugsweise durch die Spülgasabsperrorgane gebildet. Zudem ist vorzugsweise in der Absaugleitung ein Gebläse und ein Absperrorgan vorgesehen. Das Absperrorgan kann auf der Saugseite des Gebläses vorgesehen sein.

Selbstverständlich kann nach der Erfindung die regenerative thermische Nachverbrennungsanlage auch mehr als vier Regeneratoren aufweisen, beispielsweise sechs Regeneratoren, nämlich zwei Regeneratoren für den Rohgasbetrieb, zwei Regeneratoren für den Reingasbetrieb, einen Regenerator für den Spülbetrieb und einen Regenerator für den Pyrolysebetrieb.

Mit der Erfindung wird auch bei aerosol- und staubbelasteten Abgasen eine gleichbleibende hocheffiziente Reinigungsleistung einer regenerativen thermischen Nachverbrennungsanlage bei allen Betriebszuständen bei gleichzeitig hoher Verfügbarkeit und geringem Wartungsaufwand erreicht.

Nachstehend ist die Erfindung anhand der beigefügten Zeichnung näher erläutert. Darin zeigen:
- Figur 1: das Fließschema einer Ausführungsform einer erfin- dungsgemäßen Vorrichtung; und
- Figur 2 und 3: schematisch den Betrieb einer Anlage mit vier Regeneratoren im Zusammenhang mit der Tabelle 1 bzw. einer Anlage mit sechs Regeneratoren im Zusammenhang mit Tabelle 2.

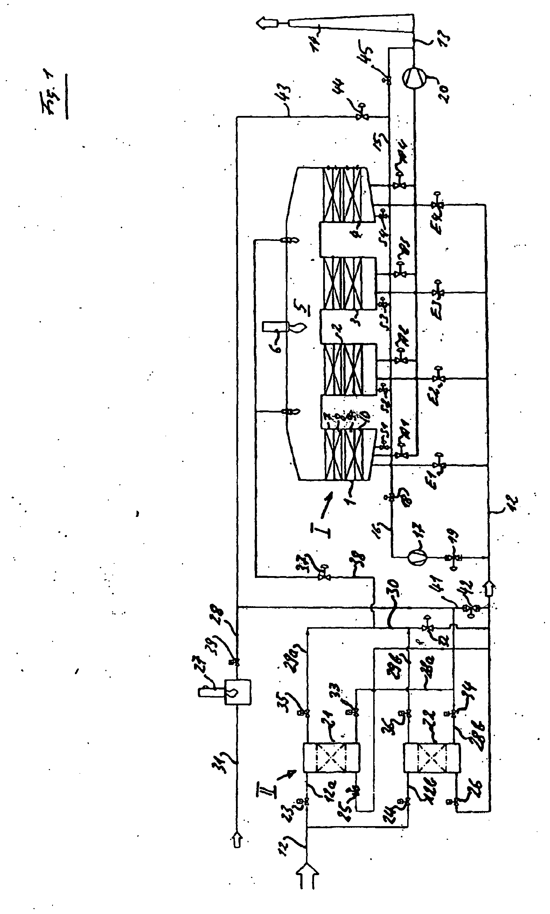

Gemäß Figur 1 weist die Vorrichtung eine regenerative thermische Nachverbrennungsanlage I mit vier Regeneratoren 1, 2, 3, 4 auf, die mit einer gemeinsamen Brennkammer 5 verbunden sind, der mit einem Hauptbrenner oder dergleichen Heizeinrichtung 6 versehen ist. Jeder Regenerator 1, 2, 3, 4 ist mit vier Lagen 7, 8, 9, 10 aus jeweils mehreren im Querschnitt rechteckigen Wärmespeicherkörpern mit parallelen Kanälen bestückt, wie sie in EP 0 472 605 B2 beschrieben sind.

Jeder Regenerator 1, 2, 3, 4 ist mit seinem von der Brennkammer 5 abgewandten, unteren Ende über ein Einlassabsperrorgan E1, E2, E3, E4 mit der Rohgasleitung 12, durch die das zu reinigende Abgas strömt, über ein Auslassabsperrorgan A1, A2, A3, A4 mit der Reingasleitung 13, durch die das Reingas einem Kamin 14 zur Abgabe ins Freie zugeführt wird, und über ein Spülabsperrorgan S1, S2, S3, S4 mit einer Spülleitung 15 verbunden. Die erwähnten Absperrorgane können beispielsweise als Klappen oder Ventile ausgebildet sein. Dies gilt auch für alle übrigen nachstehend erwähnten Absperrorgane der Vorrichtung.

Es wird zwischen dem Normalbetrieb und dem Pyrolysebetrieb unterschieden.

Solange keine Pyrolyse durchgeführt wird, kann der frei verfügbare 4. Turm jeweilig als zweiter Reingasturm verwendet werden. Dadurch bleibt das gewünschte Temperaturprofil im Turm erhalten und der Druckverlust der Gesamtanlage sinkt um ca. 25% ab.

In diesem "Normalbetrieb" werden die Türme wie folgt weitergeschaltet:
Die Absperrorgane von drei der Regeneratoren 1, 2, 3, 4, beispielsweise der Regeneratoren 1, 2, 3, sind beispielsweise so gesteuert, dass beim ersten Zyklus beim Regenerator 1 das Einlassabsperrorgan E1 geöffnet und das Auslassabsperrorgan A1 und das Spülabsperrorgan S1 geschlossen sind, während beim Regenerator 2 das Einlassabsperrorgan E2 und das Spülabsperrorgan S2 geschlossen sind und das Auslassabsperrorgan A2 geöffnet ist, und beim Regenerator 3 das Spülabsperrorgan S3 geöffnet ist, das Einlassabsperrorgan E3 und das Auslassabsperrorgan A3 hingegen geschlossen sind.

Damit wird bei diesem Zyklus dem Regenerator 1, dessen Wärmespeicherkörperlagen 7, 8, 9, 10 in dem vorherigen Zyklus erwärmt worden sind, das Rohgas aus der Leitung 12 zugeführt, das sich erwärmt und in der Brennkammer 5 durch den Brenner 6 bei einer Temperatur von z.B. 800 °C zu Reingas verbrannt wird. Das heiße Reingas wird durch den Regenerator 2 unter Erwärmung von dessen Wärmespeicherkörperlagen 7, 8, 9, 10 der Reingasleitung 13 mit einer Temperatur von z.B. 40 - 80 °C zugeführt, gleichzeitig wird der Regenerator 3 mit Reingas aus der Spülgasleitung 15 über das offene Ventil 45 gespült. Zusätzlich wird das Reingas für die Spülung über die Vorwärmleitung 43 und Ventil 44 mit heißer Frischluft um 20° - 200°, vorzugsweise um 50-100° zusätzlich erwärmt, um an der Keramik adsorbierte Komponenten zu entfernen.

Im nächsten Zyklus wird beim Regenerator 2 das Einlassventil E2 geöffnet und das Auslassventil A2 und das Spülventil S2 geschlossen, während beim Regenerator 3 das Einlassventil E3 und das Spülventil S3 geschlossen sind und das Auslassventil A3 geöffnet ist, und beim Regenerator 1 nur das Spülventil S1 geöffnet ist, das Einlassventil E1 und das Auslassventil A1 hingegen geschlossen sind. Im nächsten Zyklus wird also dem Regenerator 2, dessen Wärmespeicherkörperlagen 7, 8, 9, 10 in dem vorherigen Zyklus erwärmt worden sind, das Rohgas aus der Rohgasleitung 12 zugeführt, das sich erwärmt und in der Brennkammer 5 durch den Brenner 6 zu Reingas verbrannt wird, das durch den Regenerator 3 in die Reingasleitung 13 abgezogen wird, während der Regenerator 1 wiederum mit vorgewärmtem Reingas aus der Spülgasleitung 15 gespült wird.

Im nächsten Zyklus wird dann dem Regenerator 3 das Rohgas aus der Rohgasleitung 12 zugeführt, der Regenerator 1 an die Reingasleitung 13 angeschlossen und der Regenerator 2 mit Spülgas aus der Spülgasleitung 15 gespült, usw.

Im Pyrolysebetrieb werden die Ventile wie folgt weitergeschaltet:
Die Absperrorgane von drei der Regeneratoren 1, 2, 3, 4, beispielsweise der Regeneratoren 1, 2, 3, sind beispielsweise so gesteuert, dass beim ersten Zyklus beim Regenerator 1 das Einlassabsperrorgan E1 geöffnet und das Auslassabsperrorgan A1 und das Spülabsperrorgan S1 geschlossen sind, während beim Regenerator 2 das Einlassabsperrorgan E2 und das Spülabsperrorgan S2 geschlossen sind und das Auslassabsperrorgan A2 geöffnet ist, und beim Regenerator 3 das Spülabsperrorgan S3 geöffnet ist, das Einlassabsperrorgan E3 und das Auslassabsperrorgan A3 hingegen geschlossen sind.

Damit wird bei diesem Zyklus dem Regenerator 1, dessen Wärmespeicherkörperlagen 7, 8, 9, 10 in dem vorherigen Zyklus erwärmt worden sind, das Rohgas aus der Leitung 12 zugeführt, das sich beim Durchtritt durch die Wärmespeicher erwärmt und in der Brennkammer 5 durch den Brenner 6 bei einer Temperatur von z.B. 800 °C zu Reingas verbrannt wird. Das heiße Reingas wird durch den Regenerator 2 unter Erwärmung von dessen Wärmespeicherkörperlagen 7, 8, 9, 10 abgekühlt und der Reingasleitung 13 mit einer Temperatur von z.B. 40 - 80 °C zugeführt, gleichzeitig wird der Regenerator 3 mit heißem Brennkammergas von oben nach unten in Richtung Absaugleitung 16 gespült, die Spülluft wird dann über das Gebläse 17 und das offene Ventil 19 dem Rohgas zugeführt. Die Vorwärmung der Spülluft ist in diesem Fall nicht vorgesehen, da mit heißer Brennkammerluft gespült wird.

Im nächsten Zyklus wird beim Regenerator 2 das Einlassventil E2 geöffnet und das Auslassventil A2 und das Spülventil S2 geschlossen, während beim Regenerator 3 das Einlassventil E3 und das Spülventil S3 geschlossen sind und das Auslassventil A3 geöffnet ist, und beim Regenerator 1 nur das Spülventil S1 geöffnet ist, das Einlassventil E1 und das Auslassventil A1 hingegen geschlossen sind. Im nächsten Zyklus wird also dem Regenerator 2, dessen Wärmespeicherkörperlagen 7, 8, 9, 10 in dem vorherigen Zyklus erwärmt worden sind, das Rohgas aus der Rohgasleitung 12 zugeführt, das sich erwärmt und in der Brennkammer 5 durch den Brenner 6 zu Reingas verbrannt wird, das durch den Regenerator 3 in die Reingasleitung 13 abgezogen wird, während der Regenerator 1 wiederum mit Reingas aus der Brennkammer 5 in die Absaugleitung 16 und schließlich in das Rohgas gespült wird.

Im nächsten Zyklus wird dann dem Regenerator 3 das Rohgas aus der Rohgasleitung 12 zugeführt, der Regenerator 1 an die Reingasleitung 13 angeschlossen und der Regenerator 2 mit Spülgas in die Absaugleitung 16 gespült, usw.

Während mit den Regeneratoren 1, 2, 3 die thermische Nachverbrennung durchgeführt wird, also die Kohlenstoffverbindungen in dem zu reinigenden Abgas verbrannt werden, wird der vierte Regenerator 4 durch Pyrolyse von Ablagerungen gereinigt, die sich im Nachverbrennungsbetrieb mit der Zeit an seinen Wärmespeicherkörpern abgeschieden haben. Dazu wird aus der Brennkammer 5 die heiße Brennkammerluft kontinuierlich in den zu reinigenden Regenerator 4 gesaugt und dann ebenfalls wie die Spülluft über die Absaugleitung 16 und das Gebläse 17 in das Rohgas geführt.

Jeder Regenerator 1, 2, 3, 4 ist deshalb an seinem von der Brennkammer 5 abgewandten Ende zum Absaugen der Brennkammerluft aus der Brennkammer 5 an eine Absaugleitung 16 anschließbar, welche mit einem Gebläse 17 versehen und an die Rohgasleitung 12 angeschlossen ist.

Die Absaugleitung 16 ist dazu über ein Absperrorgan 18 an die Spülgasleitung 15 angeschlossen, ferner ist ein Absperrorgan 19 zwischen dem Gebläse 17 und der Rohgasleitung 12 vorgesehen.

Die bei der Pyrolyse der Ablagerungen in den Regeneratoren 1, 2, 3, 4 entstehenden Abgase werden über das jeweilige geöffnete Spülabsperrorgan S1, S2, S3, S4 zunächst in die Spülgasleitung 15 gesaugt, bevor sie in die Abgasleitung 16 gelangen. Das Einlassabsperrorgan E4 und das Auslassabsperrorgan A4 des zu reinigenden Regenerators 4 sind während der Pyrolyse dauernd geschlossen.

In jedem Regenerator 1, 2, 3, 4 ist unterhalb der untersten Lage 10 der Wärmespeicherkörper ein nicht dargestellter Temperaturfühler vorgesehen. Zur Pyrolyse der Ablagerungen werden auch die unteren Lagen 9, 10 mit der heißen Brennkammerluft auf eine Temperatur von mindestens 400 °C erwärmt und dann mindestens 1 h, vorzugsweise mehr als 3 h, auf dieser Temperatur gehalten. Nach der Pyrolyse wird der betreffende Regenerator 1, 2, 3, 4 mit Reingas aus der Spülgasleitung 15 durch Öffnen der Klappe 45 gespült und abgekühlt.

Das Hauptgebläse 20 ist zur Bildung eines Unterdrucks in den Regeneratoren 1, 2, 3, 4 stromabwärts der Nachverbrennungsanlage I in der Reingasleitung 13 vorgesehen. Die Spülgasleitung 15 ist an der Druckseite des Gebläses 20 an die Reingasleitung 13 angeschlossen.

Vor der Nachverbrennungsanlage I ist in der Rohgasleitung 12 eine Vorreinigungsanlage II mit wenigstens zwei parallel geschalteten Festbettfiltereinrichtungen 21, 22 angeordnet, welche wechselweise in einen Abscheide- oder einen Regenerierungsbetrieb umschaltbar sind.

Dazu ist die Rohgasleitung 12 in zwei Zweigleitungen 12a und 12b geteilt. Über die Zweigleitungen 12a und 12b wird das Abgas den Festbettfiltern 21, 22 an ihrem oberen Ende über ein Absperrorgan 23, 24 zugeführt und am unteren Ende der Festbettfilter 21, 22, an dem ebenfalls ein Absperrorgan 25, 26 vorgesehen ist, abgezogen. Wenn die betreffende Festbettfiltereinrichtung 21, 22 auf Abscheidebetrieb geschaltet ist, sind damit die betreffenden Absperrorgane 23 bzw. 24 und 25 bzw. 26 in den Zweigleitungen 12a und 12b geöffnet. Im Regenerierungsbetrieb der betreffenden Festbettfiltereinrichtungen 21, 22 werden die Absperrorgane 23 und 25 bzw. 24 und 26 hingegen geschlossen.

Die Regenerierung der Festbettfiltereinrichtungen 21, 22 erfolgt mit Heißluft. Dazu wird mit einem Brenner 27 Frischluft, die über die Leitung 31 zugeführt wird, erwärmt, die über eine Heißluftleitung 28 den Festbettfiltereinrichtungen 21, 22 zugeführt wird. Die Heißluftleitung 28 ist in zwei Zweigleitungen 28a, 28b geteilt, die jeweils an das untere Ende eines der Festbettfilter 21, 22 angeschlossen sind. Vom oberen Ende jedes Festbettfilters 21, 22 führt eine Leitung 29a, 29b zu einer Sammelleitung 30, die an die Rohgasleitung 12 zwischen der Nachverbrennungsanlage I und der Vorreinigungsanlage II angeschlossen und mit einem Absperrorgan 32 versehen ist. Ferner sind in den Leitungen 28a, 28b, 29a, 29b jeweils Absperrorgane 33, 34, 35 und 36 vorgesehen. Eine mit einem Absperrorgan 37 versehene Zweigleitung 38 führt von der Sammelleitung 30 zur Brennkammer 5 der regenerativen thermischen Nachverbrennungsanlage I.

Wenn beispielsweise das Festbettfilter 21 auf Regenerierungsbetrieb umgeschaltet wird, werden die Absperrorgane 23 und 25, über die Rohgas zugeführt bzw. das filtrierte Rohgas abgezogen wird, geschlossen und die Absperrorgane 33, 35 in der Zweigleitung 28a und 29a geöffnet. Ferner ist das Absperrorgan 39 in der Heißluftleitung 28 geöffnet, desgleichen das Absperrorgan 32 in der Sammelleitung 30 zur Rohgasleitung 12, während das Absperrorgan 37 in der Zweigleitung 38 zunächst geschlossen ist.

Auf diese Weise wird das Festbettfilter 21 durch die Heißluft über die Heißluftleitung 28 und die Leitung 28a erwärmt, wobei die leichter flüchtigen Verbindungen, die vom Festbettfilter 21 zurückgehalten worden sind oder sich aus vom Festbettfilter 21 zurückgehaltenen Verbindungen durch Oxidation oder Pyrolyse bilden, über die Leitung 29a und die Sammelleitung 30 der Rohgasleitung 12 zugeführt werden. Wenn die Temperatur in dem Festbettfilter 21 beispielsweise 300 °C erreicht, wird das Absperrorgan 32 geschlossen und das Absperrorgan 37 geöffnet, so dass die schwer flüchtigen Verbindungen, die sich noch im Festbettfilter 21 befinden und erst bei höherer Temperatur ausgetrieben werden, über die Leitung 29a und die Leitung 38 direkt der Brennkammer 5 zugeführt und dort verbrannt werden.

Wenn keine Regenerierung eines der Festbettfilter 21 und 22 stattfindet oder das Absperrorgan 32 bei der Regenerierung geschlossen wird, wird das Abgas in der Rohgasleitung 12 durch die mit dem Brenner 27 erhitzte Heißluft vorerwärmt. Dazu ist die Heißluftleitung 28 über eine Leitung 41 mit einem Absperrorgan 42 an die Rohgasleitung 12 angeschlossen.

Um das Reingas in der Spülgasleitung 15 zu erwärmen, ist die Spülgasleitung 15 über eine Leitung 43 mit einem Absperrorgan 44 an die Heißluftleitung 28 angeschlossen. Ferner ist in der Spülgasleitung 15 stromaufwärts der Leitung 43 ein Absperrorgan 45 vorgesehen.

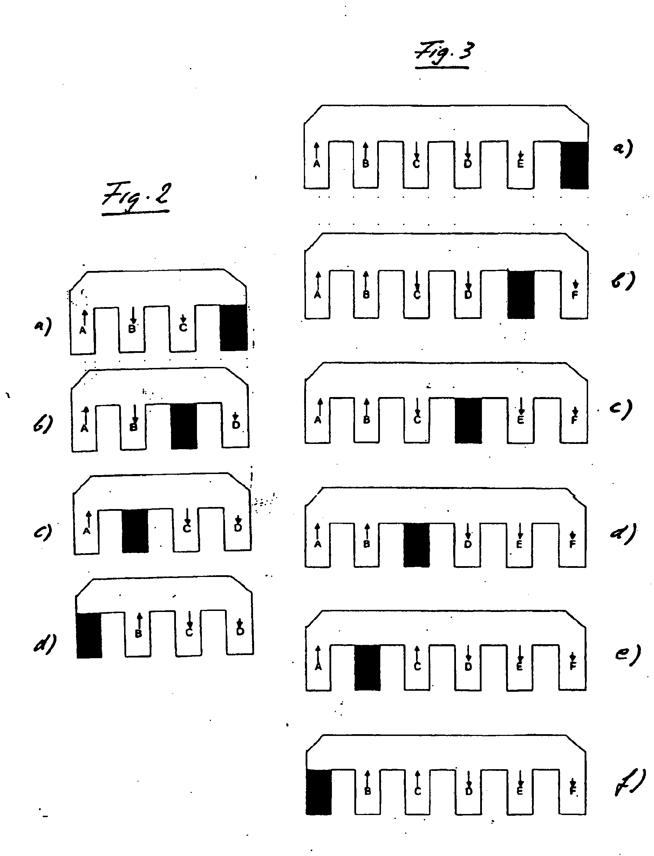

Die nachstehende Tabelle 1 zeigt das Betriebsschema einer regenerativen thermischen Verbrennungsanlage mit integrierter Pyrolyse mit vier Regeneratoren oder Türmen A, B, C, D, wie es in Figur 2 schematisch dargestellt ist. Die einzelnen Schritte sind in Figur 2 und Tabelle 1 mit a), b), c) und d) wiedergegeben. Der Turm oder Regenerator, der bei dem jeweiligen Schritt einer Pyrolyse unterworfen wird, ist in Figur 2 schwarz dargestellt. Mit "normal" sind in Tabelle 1 die normalen Betriebsarten einer thermischen regenerativen Nachverbrennungsanlage, also Rohgaszufuhr und Reingasabfuhr sowie Spülen, bezeichnet.

Tabelle 2 und Figur 3 zeigen das Betriebsschema für eine entsprechende Anlage mit sechs Regeneratoren oder Türmen A, B, C, D, E, F mit den Schritten a), b), c), d), e), f).

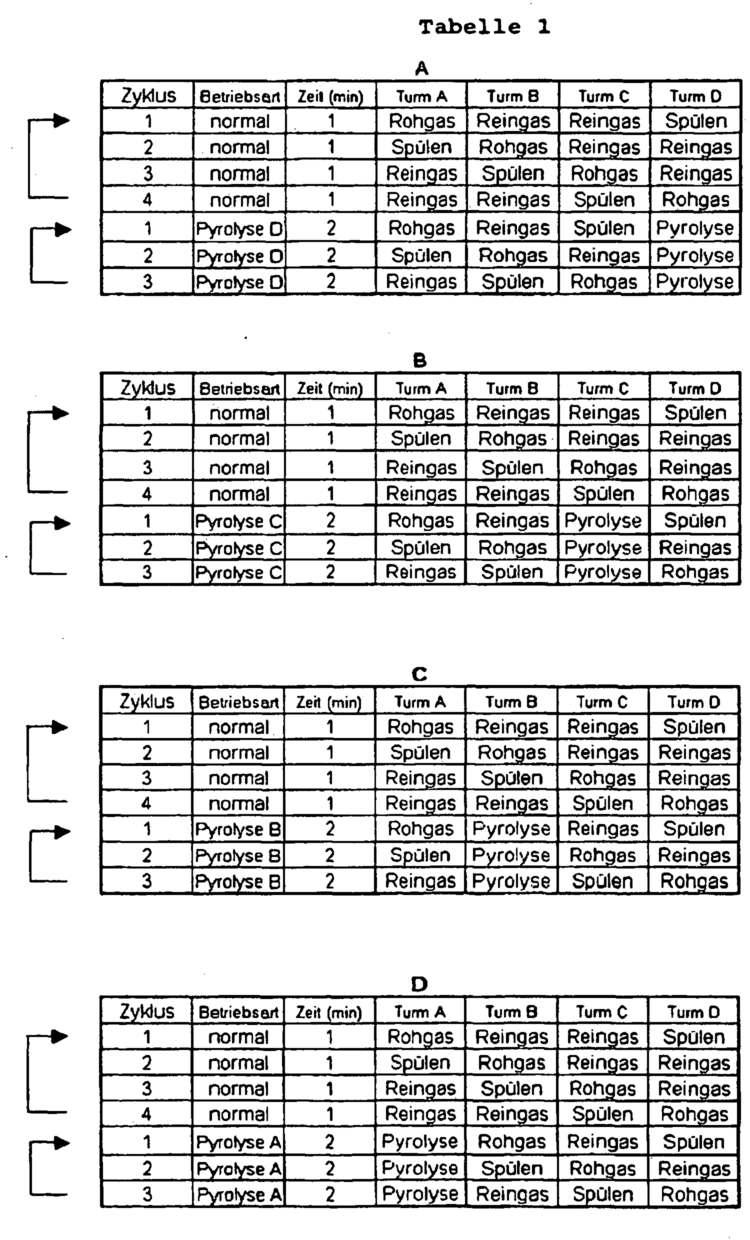

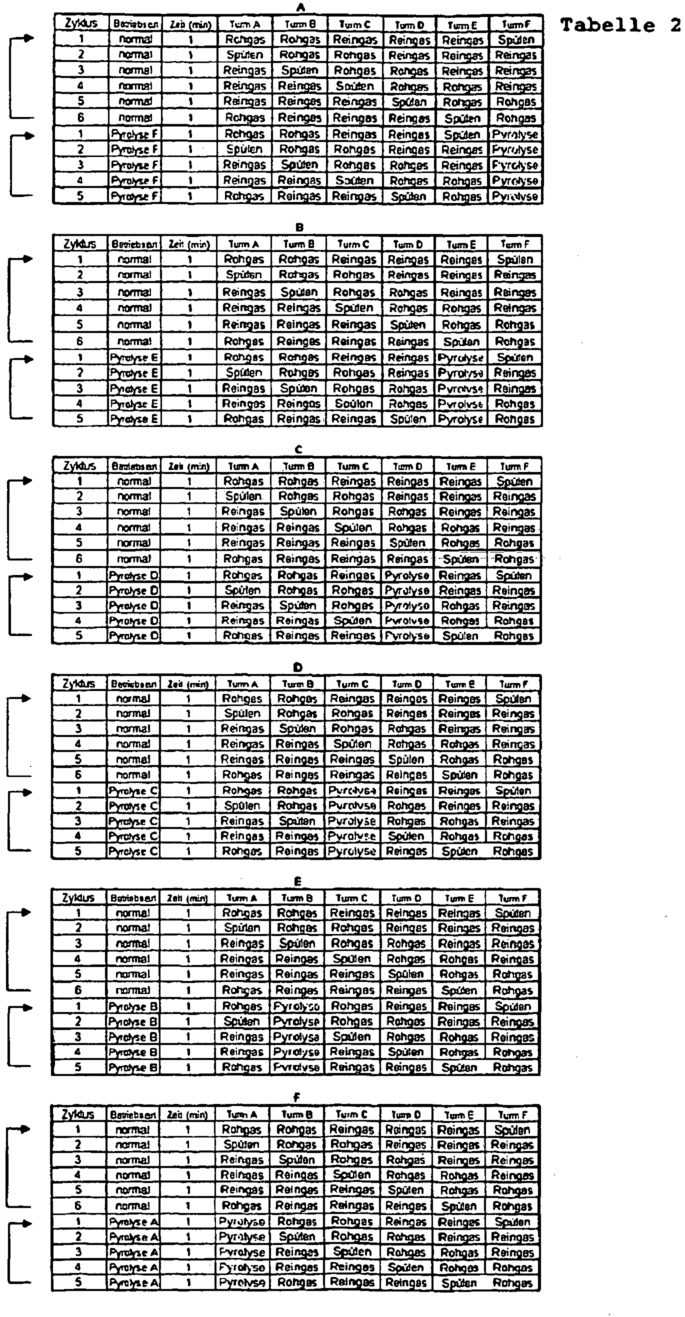

## Patentansprüche

1. Verfahren zur Reinigung von Abgas mit mindestens einer regenerativen thermischen Nachverbrennungsanlage (I), die wenigstens vier mit keramischen Wärmespeicherkörpern gefüllte und mit einer gemeinsamen Brennkammer (5) verbundene Regeneratoren (1, 2 3, 4) umfasst, bei dem
in einer ersten Phase das Abgas wenigstens einem ersten Regenerator (1, 2, 3, 4) zugeführt wird, dessen Wärmespeicherkörper zuvor erwärmt worden sind, um das Abgas in der Brennkammer (5) zu Reingas zu verbrennen, welches durch wenigstens einen zweiten Regenerator (1, 2, 3, 4) unter Erwärmung von dessen Wärmespeicherkörpern abgezogen wird, wobei wenigstens ein dritter Regenerator (1, 2, 3, 4) mit Reingas, das aus der Brennkammer (5) abgesaugt wird, gespült und die abgesaugte Spülluft dem Abgas zugeführt wird,
in einer zweiten Phase dem zweiten Regenerator (1, 2, 3, 4) das Abgas zugeführt wird, dessen Wärmespeicherköper in der ersten Phase erwärmt worden sind, um das Abgas in der Brennkammer (5) zu Reingas zu verbrennen, welches durch den dritten Regenerator (1, 2, 3, 4) unter Erwärmung von dessen Wärmespeicherkörpern abgezogen wird, wobei der erste Regenerator (1, 2, 3, 4) mit Reingas, das aus der Brennkammer (5) abgesaugt wird, gespült wird und die abgesaugte Spülluft dem Abgas zugeführt wird, und
in einer dritten Phase das Abgas dem dritten Regenerator (1, 2, 3, 4) zugeführt wird, dessen Wärmespeicherkörper in der zweiten Phase erwärmt worden sind, um das Abgas in der Brennkammer (5) zu Reingas zu verbrennen, welches durch den ersten Regenerator (1, 2, 3, 4) unter Erwärmung von dessen Wärmespeicherkörpern abgezogen wird, wobei der zweite Regenerator (1, 2, 3, 4) mit Reingas, das aus der Brennkammer (5) abgesaugt wird, gespült und die abgesaugte Spülluft dem Abgas zugeführt wird, worauf die erste, zweite und dritte Phase nacheinander wiederholt werden, während durch den wenigstens einen vierten Regenerator (1, 2, 3, 4) das Reingas aus der Brennkammer (5) abgesaugt wird, das anschließend überein Gebläse (17) dem Abgas zugeführt wird, um die Ablagerungen an den Wärmespeicherkörpern des vierten Regenerators (1, 2, 3, 4) durch Pyrolyse zu entfernen und wiederum in der Brennkammer (5) mit dem Abgas zu verbrennen, wobei das Abgas vor der Zufuhr zur regenerativen thermischen Nachverbrennungsanlage (I) einer Vorreinigungsanlage (II) mit wenigstens zwei parallel geschalteten Festbettfiltereinrichtungen (21, 22) zugeführt wird, die wechselweise in einen Abscheidebetrieb und einen Regenerierungsbetrieb umschaltbar sind, die Regenerierung der Festbettfiltereinrichtungen (21, 22) durch Erwärmung erfolgt, die Festbettfiltereinrichtungen (21, 22) zur Regenerierung mit Heißluft erwärmt werden und die beim Erwärmen der Festbettfiltereinrichtungen (21, 22) entstehenden Abgase zunächst dem Abgas in der Rohgasleitung (12) zu der regenerativen thermischen Nachverbrennungsanlage (I) und bei einer Temperatur von über 200 °C, vorzugsweise über 300 °C, der Brennkammer (5) der regenerativen thermischen Nachverbrennungsanlage (I) zugeführt werden.

2. Verfahren nach Anspruch 1, **dadurch gekennzeichnet, dass** die Wärmespeicherkörper zur Pyrolyse durch die heiße Brennkammerluft wenigstens 1 h auf wenigstens 400 °C erwärmt werden.

3. Verfahren nach Anspruch 1 oder 2, **dadurch gekennzeichnet, dass** der Regenerator (1, 2, 3, 4) nach der Pyrolyse mit Reingas gespült und abgekühlt wird.

4. Verfahren nach Anspruch 1, **dadurch gekennzeichnet, dass** die Heißluft durch Aufheizen von Frischluft mit einem Brenner (27) erzeugt wird.

5. Verfahren nach Anspruch 4, **dadurch gekennzeichnet, dass** die Temperatur der Abgase in der Rohgasleitung (12) zur regenerativen thermischen Nachverbrennungsanlage (I) durch die Heißluft um 20 - 100 °C, vorzugsweise 30 - 50 °C erhöht wird.

6. Verfahren nach Anspruch 4, **dadurch gekennzeichnet, dass** im Normalbetrieb die Temperatur des Reingases zum Spülen der Regeneratoren (1, 2, 3, 4) durch die Heißluft um 50 - 200 °C, vorzugsweise 100-150 °C erhöht wird.

7. Verfahren nach einem der vorstehenden Ansprüche, **dadurch gekennzeichnet, dass** ein weiterer Regenerator so im Normalbetrieb eingebunden wird, dass jeweils zwei Regeneratoren gleichzeitig als Reingastürme verwendet werden, ein Regenerator gespült wird und ein Regenerator als Rohgasturm verwendet wird.

8. Vorrichtung zur Durchführung des Verfahrens nach einem der vorstehenden Ansprüche mit einer regenerativen thermischen Nachverbrennungsanlage (I) mit wenigstens vier mit keramischen Wärmespeicherkörpern gefüllten, durch eine gemeinsame Brennkammer (5) verbundenen Regeneratoren (1, 2, 3, 4), einer Rohgasleitung (12) für das Abgas, einer Reingasleitung (13), einer an die Reingasleitung (13) angeschlossenen Spülgasleitung (15) und wenigstens einem Gebläse (20) zur Förderung des Abgases, Reingases und Spülgases, wobei jeder Regenerator (1, 2, 3, 4) an seiner von der Brennkammer (5) abgewandten Seite über ein Einlassabsperrorgan (E1, E2, E3, E4) an die Rohgasleitung(12), über ein Auslassabsperrorgan (A1, A2, A3, A4) an die Reingasleitung (13) und über ein Spülgasabsperrorgan (S1, S2, S3, S4) an die Spülgasleitung (15) anschließbar ist, und eine Steuerung vorgesehen ist, die entsprechend den drei Phasen des Anspruchs 1 wechselweise das Einlassabsperrorgan (E1, E2, E3, E4) zu wenigstens einem Regenerator (1, 2, 3, 4), das Auslassabsperrorgan (A1, A2, A3, A4) zu wenigstens einem weiteren Regenerator (1, 2, 3, 4) und das Spülgasabsperrorgan (S1, S2, S3, S4) zu noch einem weiteren Regenerator (1, 2, 3, 4) öffnet, **dadurch gekennzeichnet, dass** jeder Regenerator (1, 2, 3, 4) an seiner von der Brennkammer (5) abgewandten Seite über das Spülgasabsperrorgan (S1,S2, S3, S4) an eine Absaugleitung (16) zum Absaugen der Brennkammerluft aus der Brennkammer (5) in die Rohgasleitung (12) stromaufwärts der regenerativen thermischen Nachverbrennungsanlage (I) anschließbar ist und die Steuerung so ausgelegt ist, dass das Absaugabsperrorgan (S1,S2, S3, S4) wenigstens eines Regenerators (1, 2, 3, 4) dauernd geöffnet ist, während die Einlass-(E1, E2, E3, E4), Auslass- (A1, A2, A3, A4) und Spülgasabsperrorgane (S1, S2, S3, S4) der übrigen Regeneratoren (1, 2, 3, 4) entsprechend den drei Phasen des Anspruchs 1 betätigt werden, wobei in der Rohgasleitung (12) stromaufwärts der regenerativen thermischen Nachverbrennungsanlage (I) eine Vorreinigungsanlage (II) mit wenigstens zwei parallel geschalteten Festbettfiltereinrichtungen (21, 22) angeordnet ist, welche wechselweise in einen Abscheide- oder Regenerierungsbetrieb umschaltbar sind und die aus der Festbettfiltereinrichtung (21, 22) beim Regenerierungsbetrieb austretenden Abgase über ein erstes Absperrorgan (32) der Rohgasleitung (12) und über ein zweites Absperrorgan (37) der Brennkammer (5) der regenerativen thermischen Nachverbrennungsanlage (I) zuführbar sind.

9. Vorrichtung nach Anspruch 8, **dadurch gekennzeichnet, dass** eine Heißluftleitung (28) zur Zufuhr von mit einem Brenner (27) erwärmter Heißluft vorgesehen ist.

10. Vorrichtung nach Anspruch 8 und 9, **dadurch gekennzeichnet, dass** die Heißluftleitung (28) an die auf Regenerierungsbetrieb umgeschaltete Festbettfiltereinrichtung (21, 22) anschließbar ist.

11. Vorrichtung nach Anspruch 8, **gekennzeichnet durch** eine Steuerung, die das erste Absperrorgan (32) bei Erreichen einer Temperatur von wenigstens 200 °C der auf Regenerierungsbetrieb umgeschalteten Festbettfiltereinrichtung (21, 22) schließt und das zweite Absperrorgan (37) zur Brennkammer (5) öffnet.

12. Vorrichtung nach einem der Ansprüche 9 bis 11, **dadurch gekennzeichnet, dass** die Heißluftleitung (28) zur Rohgasvorerwärmung über ein Absperrorgan (42) an die Rohgasleitung (12) anschließbar ist.

13. Vorrichtung nach Anspruch 12, **dadurch gekennzeichnet, dass** die Heißluftleitung (28) zur Rohgasvorerwärmung zwischen der Vorreinigungsanlage (II) und der regenerativen thermischen Nachverbrennungsanlage (I) an die Rohgasleitung (12) anschließbar ist.

14. Vorrichtung nach einem der Ansprüche 9 bis 13, **dadurch gekennzeichnet, dass** die Heißluftleitung (28) zur Vorerwärmung des Spülgases an die Spülgasleitung (15) anschließbar ist.

15. Verfahren nach Anspruch 1, **dadurch gekennzeichnet, dass** das zu reinigende Abgas mit organischen Kohlenstoffverbindungen in Form von Aerosolen, Staub, Teer und/oder Ruß belastet ist.

16. Verfahren nach Anspruchen 15, **dadurch gekennzeichnet, dass** das zu reinigende Abgas polyaromatische Kohlenwasserstoffe enthält.

## Claims

1. Method for treating waste gas with at least one regenerative thermal afterburning system (T), comprising at least four regenerators (1, 2, 3, 4) filled with ceramic heat accumulator bodies and connected to a common combustion chamber (5), the waste gas being admitted in a first phase, at least to a first regenerator (1, 2, 3, 4), whose heat accumulator bodies have been preheated, in order to burn the waste gas in the combustion chamber (5) to yield clean gas, the said waste gas being extracted by at least a second regenerator (1, 2, 3, 4), with simultaneous heating of the latter's heat accumulator bodies, and with at least a third regenerator (1, 2, 3, 4) that is flushed with clean gas extracted from the combustion chamber (5), the extracted flush air then being admitted to the waste gas, and in a second phase, the waste gas being admitted to the second regenerator (1, 2, 3, 4), whose heat accumulator bodies were heated during the first phase, in order to burn the waste gas in the combustion chamber (5) to yield clean gas, the clean gas then being extracted through the third regenerator (1, 2, 3, 4) with simultaneous heating of the latter's heat accumulator bodies, the first regenerator (1, 2, 3, 4) being flushed with clean gas that has been extracted from the combustion chamber (5), and the extracted flush air being admitted to the waste gas, with the waste gas, in a third phase, being admitted to the third regenerator (1, 2, 3, 4), whose heat accumulator bodies were heated in the second phase, in order to burn the waste gas in the combustion chamber (5) to yield clean gas, the said clean gas being extracted by the first regenerator (1, 2, 3, 4) with simultaneous heating of the latter's heat accumulator bodies, the second regenerator (1, 2, 3, 4) being flushed with clean gas that has been extracted from the combustion chamber (5), the extracted flush air being admitted to the waste gas, with the first, second, and third phases being repeated continuously, and the (at least one) remaining fourth regenerator (1, 2, 3, 4) extracting the clean gas from the combustion chamber (5), the said gas then being admitted to the waste gas via a fan (17) in order to remove deposits from the heat accumulator bodies of the fourth regenerator (1, 2, 3, 4) by means of pyrolysis, and the gas then being burned again in the combustion chamber (5) together with the waste gas, wherein the waste gas, before being admitted to the regenerative thermal afterburning system (I), is admitted to a preliminary purification system (II) with at least two fixed-bed filter devices (21, 22) connected in parallel, which can be alternately switched to separation mode or regeneration mode, respectively, regeneration of the fixed-bed filter devices (21, 22) is performed by heating, regeneration of the fixed-bed filter devices (21, 22) is performed with hot air and the waste gases created by heating the fixed-bed filter devices (21, 22) are first admitted to the waste gas in the crude gas line (12) leading to the regenerative thermal afterburning system (I), and then, at a temperature of over 200°C, preferably over 300°C, to the combustion chamber (5) of the regenerative thermal afterburning system (I).

2. Method according to Claim 1, **characterized in that** the heat accumulator bodies are heated by the hot combustion chamber air for at least 1 hrto at least 400°C for the pyrolysis process.

3. Method according to Claim 1 or 2, **characterized in that** the regenerator (1, 2, 3, 4) is flushed with clean gas and cooled after pyrolysis.

4. Method in accordance with Claim 1, **characterized in that** the hot air is generated by heating fresh air with a burner (27).

5. Method in accordance with Claim 4, **characterized in that** the temperature of the waste gases in the crude gas line (12) to the regenerative thermal afterburning system (I) is increased by the hot air by between 20 and 100°C, preferably by between 30 and 50°C.

6. Method in accordance with Claim 4, **characterized in that** the temperature of the clean gas to flush the regenerators (1, 2, 3, 4) is increased in normal operating mode by the hot air by between 50 and 200°C, preferably by between 100 and 150°C.

7. Method in accordance with one of the preceding claims, **characterized in that** a further regenerator is incorporated in normal operating mode so that two regenerators can be used simultaneously as clean gas towers, with one regenerator being flushed and one regenerator being used as a crude gas tower.

8. Apparatus to perform the process in accordance with one of the preceding claims with a regenerative thermal afterburning system (I) with at least four regenerators (1, 2, 3, 4) filled with ceramic heat accumulator bodies and connected via a common combustion chamber (5), a crude gas line (12) for the waste gas, a clean gas line (13), a flush gas line (15) connected to the clean gas line (13), and at least one fan (20) to convey the waste gas, clean gas, and flush gas, whereby each regenerator (1, 2, 3, 4) is connectable on the side opposite the combustion chamber (5) via an inlet shutoff device (E1, E2, E3, E4) to the crude gas line (12), via an outlet shut-off device (A1, A2, A3, A4) to the clean gas line (13), and via a flush gas shutoff device (S1, S2, S3, S4) to the flush gas line (15), with a regulation system envisaged that alternately opens the inlet shut-off device (E1, E2, E3, E4) to at least one regenerator (1, 2, 3, 4), the outlet shut-off device (A1, A2, A3, A4) to at least one additional regenerator (1, 2, 3, 4), and the flush gas shut-off device (S1, S2, S3, S4) to a further regenerator (1, 2, 3, 4), according to the three phases of Claim 1, **characterized in that** each regenerator (1, 2, 3, 4) is connectable at the side opposite the combustion chamber (5) via the flush gas shut-off device (S1, S2, S3, S4) to an extraction line (16) to extract the combustion chamber air from the combustion chamber (5) into the crude gas line (12) upstream of the regenerative thermal afterburning system (I), the regulatory system being designed in such a way that the extraction shut-off device (S1, S2, S3, S4) of at least one regenerator (1, 2, 3, 4) remains continuously open, while the inlet (E1, E2, E3, E4), outlet (A1, A2, A3, A4), and flush gas (S1, S2, S3, S4) shut-off devices of the remaining regenerators (1, 2, 3, 4) operate according to the three phases of Claim 1., wherein a preliminary purification system (II) is installed in the crude gas line (12) upstream of the regenerative thermal afterburning unit (I) with at least two fixed-bed filter devices (21, 22) connected in parallel, which can be alternately switched to separation or regeneration mode and the waste gases emitted from the fixed-bed filter device (21, 22) in regeneration mode can be admitted via an initial shut-off device (32) to the crude gas line (12) and via a second shut-off device (37) to the combustion chamber (5) of the regenerative thermal afterburning system (I).

9. Apparatus in accordance with Claim 8, **characterized in that** a hot air line (28) is envisaged to admit hot air that has been heated by a burner (27).

10. Apparatus in accordance with Claims 8 and 9, **characterized in that** the hot air line (28) can be connected to the fixed-bed filter device (21, 22) that is switched to regeneration mode.

11. Apparatus in accordance with Claim 8, **characterized in that** a regulatory system closes the first shut-off device (32) on the fixed-bed filter device (21, 22) that is switched to regeneration mode when it reaches a temperature of at least 200°C and opens the second shut-off device (37) to the combustion chamber (5).

12. Apparatus in accordance with one of Claims 9 to 11, **characterized in that** the hot air line (28) for preheating the crude gas can be connected via a shut-off device (42) to the crude gas line (12).

13. Apparatus in accordance with Claim 12, **characterized in that** the hot air line (28) for preheating the crude gas is connectable to the crude gas line (12) between the preliminary purification system (II) and the regenerative thermal afterburning system (1).

14. Apparatus in accordance with Claims 9 to 13, **characterized in that** the hot air line (28) for preheating the flush gas can be connected to the flush gas line (15).

15. Method in accordance with Claim 1, **characterized in that** the waste gas to be treated is laden with organic carbon compounds in the form of aerosols, dust, tar, and/or soot.

16. Method in accordance with Claim 15, **characterized in that** the waste gas to be treated contains polyaromatic hydrocarbons.

## Revendications

1. Procédé de purification de gaz d'échappement comportant au moins une installation de postcombustion (I) thermique régénérative qui comprend au moins quatre régénérateurs (1, 2, 3, 4) remplis de corps d'accumulation thermique en céramique et reliés à une chambre de combustion (5) commune, dans lequel, dans une première phase, le gaz d'échappement est amené à au moins un premier régénérateur (1, 2, 3, 4) dont les corps d'accumulation thermique ont été auparavant chauffés pour brûler le gaz d'échappement dans la chambre de combustion (5) pour obtenir du gaz purifié qui est retiré par au moins un deuxième régénérateur (1, 2, 3, 4) en chauffant ses corps d'accumulation thermique, au moins un troisième régénérateur (1, 2, 3, 4) étant rincé avec du gaz purifié qui est aspiré hors de la chambre de combustion (5), et l'air de rinçage aspiré étant amené au gaz d'échappement, dans une deuxième phase, le gaz d'échappement est amené au deuxième régénérateur (1, 2, 3, 4) dont les corps d'accumulation thermique ont été chauffés dans la première phase pour brûler le gaz d'échappement dans la chambre de combustion (5) pour obtenir du gaz purifié qui est retiré par le troisième régénérateur (1, 2, 3, 4) en chauffant ses corps d'accumulation thermique, le premier régénérateur (1, 2, 3, 4) étant rincé avec du gaz purifié qui est aspiré hors de la chambre de combustion (5), et l'air de rinçage aspiré étant amené au gaz d'échappement, et dans une troisième phase, le gaz d'échappement est amené au troisième régénérateur (1, 2, 3, 4) dont les corps d'accumulation thermique ont été chauffés dans la deuxième phase pour brûler le gaz d'échappement dans la chambre de combustion (5) pour obtenir du gaz purifié qui est retiré par le premier régénérateur (1, 2, 3, 4) en chauffant ses corps d'accumulation thermique, le deuxième régénérateur (1, 2, 3, 4) étant rincé avec du gaz purifié qui est aspiré hors de la chambre de combustion (5), et l'air de rinçage aspiré étant amené au gaz d'échappement, à la suite de quoi les première, deuxième et troisième phases sont répétées les unes après les autres tandis que par au moins un quatrième régénérateur (1, 2, 3, 4), le gaz purifié est aspiré hors de la chambre de combustion (5) et il est ensuite amené au gaz d'échappement au moyen d'une soufflante pour enlever par pyrolyse les dépôts sur les corps d'accumulation thermique du quatrième régénérateur (1, 2, 3, 4) et pour de nouveau les brûler avec le gaz d'échappement dans la chambre de combustion (5), le procédé comportant avant l'amenée vers l'installation de postcombustion (I) thermique régénérative, le gaz d'échappement est amené à une installation de pré-purification (II) avec au moins deux dispositifs de filtre à lit fixe (21, 22) montés en parallèle qui peuvent être commutés alternativement en un fonctionnement de séparation et en un fonctionnement de régénération, la régénération des dispositifs de filtres à lit fixe (21, 22) est effectuée par chauffage, pour la régénération, les dispositifs de filtres à lit fixe (21, 22) sont chauffés par de l'air chaud et les gaz d'échappement qui se produisent lors du chauffage des dispositifs de filtres à lit fixe (21, 22) sont amenés tout d'abord au gaz d'échappement dans la conduite de gaz brut (12) menant à l'installation de postcombustion (1) thermique régénérative et, à une température de plus de 200°C, de préférence de plus de 300°C, à la chambre de combustion (5) de l'installation de postcombustion (I) thermique régénérative.

2. Procédé selon la revendication 1, **caractérisé en ce que** pour la pyrolyse, les corps d'accumulation thermique sont chauffés à au moins 400°C par l'air chaud de la chambre de combustion pendant au moins 1 heure.

3. Procédé selon la revendication 1 ou 2, **caractérisé en ce qu'**après la pyrolyse, le régénérateur (1, 2, 3, 4) est rincé avec du gaz purifié et est refroidi.

4. Procédé selon la revendication 1, **caractérisé en ce que** l'air chaud est engendré en chauffant de l'air frais au moyen d'un brûleur (27).

5. Procédé selon la revendication 4, **caractérisé en ce que** la température des gaz d'échappement dans la conduite de gaz brut (12) menant à l'installation de postcombustion (I) thermique régénérative est augmentée par l'air chaud de 20 à 100°C, de préférence de 30 à 50°C.

6. Procédé selon la revendication 4, **caractérisé en ce qu'**en fonctionnement normal, la température du gaz purifié pour rincer les régénérateurs (1, 2, 3, 4) est augmentée par l'air chaud de 50 à 200°C, de préférence de 100 à 150°C.

7. Procédé selon l'une quelconque des revendications précédentes, **caractérisé en ce qu'**un autre régénérateur est intégré dans le fonctionnement normal de telle sorte que deux régénérateurs respectifs sont utilisés simultanément en tant que tours de gaz purifié, un régénérateur est rincé et un régénérateur est utilisé en tant que tour de gaz brut.

8. Dispositif pour mettre en oeuvre le procédé selon l'une quelconque des revendications précédentes, comportant une installation de postcombustion (I) thermique régénérative qui comprend au moins quatre régénérateurs (1, 2, 3, 4) remplis de corps d'accumulation thermique en céramique et reliés à une chambre de combustion (5) commune, une conduite de gaz brut (12) pour le gaz d'échappement, une conduite de gaz purifié (13), une conduite de gaz de rinçage (15) raccordée à la conduite de gaz purifié (13), et au moins une soufflante (20) pour transporter le gaz d'échappement, le gaz purifié et le gaz de rinçage, chaque régénérateur (1, 2, 3, 4) pouvant être raccordé, sur son côté détourné de la chambre de combustion (5), à la conduite de gaz brut (12) via une vanne d'entrée (E1, E2, E3, E4), à la conduite de gaz purifié (13) via une vanne de sortie (A1, A2, A3, A4) et à la conduite de gaz de rinçage (15) via une vanne de gaz de rinçage (S1, S2, S3, S4), et une commande étant prévue, laquelle ouvre, selon les trois phases de la revendication 1, alternativement la vanne d'entrée (E1, E2, E3, E4) vers au moins un régénérateur (1, 2, 3, 4), la vanne de sortie (A1, A2, A3, A4) vers au moins un autre régénérateur (1, 2, 3, 4) et la vanne de gaz de rinçage (S1, S2, S3, S4) vers un autre régénérateur (1, 2, 3, 4) encore, **caractérisé en ce que** chaque régénérateur (1, 2, 3, 4), sur son côté détourné de la chambre de combustion (5), peut être raccordé à une conduite d'aspiration (16) via la vanne de gaz de rinçage (S1, S2, S3, S4) pour aspirer l'air de chambre de combustion hors de la chambre de combustion (5) dans la conduite de gaz brut (12) en amont de l'installation de postcombustion (I) thermique régénérative, et **en ce que** la commande est conçue de telle sorte que la vanne d'aspiration (S1, S2, S3, S4) d'au moins un régénérateur (1, 2, 3, 4) est ouverte en permanence, tandis que les vannes d'entrée (E1, E2, E3, E4), de sortie (A1, A2, A3, A4) et de gaz de rinçage (S1, S2, S3, S4) des trois autres régénérateurs (1, 2, 3, 4) sont actionnées selon les trois phases de la revendication 1, le dispositif comportant dans la conduite de gaz brut (12), en amont de l'installation de postcombustion (I) thermique régénérative, est agencée une installation de pré-purification (II) comportant au moins deux dispositifs de filtre à lit fixe montés en parallèle, qui sont alternativement commutables en un fonctionnement de séparation ou de régénération et les gaz d'échappement sortant hors du dispositif de filtre à lit fixe (21, 22) lors du fonctionnement de régénération peuvent être amenés via une première vanne (32) à la conduite de gaz brut (12) et via une deuxième vanne (37) à la chambre de combustion (5) de l'installation de postcombustion (I) thermique régénérative.

9. Dispositif selon la revendication 8, **caractérisé en ce qu'**une conduite d'air chaud (28) est prévue pour l'amenée d'air chaud chauffé par un brûleur (27).

10. Dispositif selon les revendications 8 et 9, **caractérisé en ce que** la conduite d'air chaud (28) peut être raccordée au dispositif de filtre à lit fixe (21, 22) commuté en fonctionnement de régénération.

11. Dispositif selon la revendication 8, **caractérisé par** une commande qui ferme la première vanne (32) lorsqu'une température d'au moins 200°C du dispositif de filtre à lit fixe (21, 22) commuté en fonctionnement de régénération et qui ouvre la deuxième vanne (37) vers la chambre de combustion (5).

12. Dispositif selon l'une des revendications 9 à 11, **caractérisé en ce que** la conduite d'air chaud (28) vers le préchauffage de gaz brut peut être raccordée à la conduite de gaz brut (12) via une vanne (42).

13. Dispositif selon la revendication 12, **caractérisé en ce que** la conduite d'air chaud (28) vers le préchauffage de gaz brut peut être raccordée à la conduite de gaz brut (12) entre l'installation de pré-purification (II) et l'installation de postcombustion (I) thermique régénérative.

14. Dispositif selon l'une des revendications 9 à 13, **caractérisé en ce que** la conduite d'air chaud (28) pour le préchauffage du gaz de rinçage peut être raccordée à la conduite de gaz de rinçage (15).

15. Procédé selon la revendication 1, **caractérisé en ce que** le gaz d'échappement à purifier est chargé de composés d'hydrocarbure organiques sous la forme d'aérosols, de poussière, de goudron et/ou de suie.

16. Procédé selon la revendication 15, **caractérisé en ce que** le gaz d'échappement à purifier contient des hydrocarbures polyaromatiques.
